(19) Europäisches Patentamt / European Patent Office / Office européen des brevets

(11) **EP 2 466 902 B1**

(12) **EUROPEAN PATENT SPECIFICATION**

(45) Date of publication and mention
of the grant of the patent:
**24.05.2017 Bulletin 2017/21**

(51) Int Cl.:
***H04N 13/00*** *(2006.01)*

(21) Application number: **11191981.7**

(22) Date of filing: **05.12.2011**

(54) **Information permeability based disparity estimation in stereo video**

Informationsdurchlässigkeit basierend auf der Disparitätsbeurteilung in einem Stereo-Video

Évaluation de la disparité basée sur la perméabilité des informations dans une vidéo stéréo

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2010 TR 201010438**

(43) Date of publication of application:
**20.06.2012 Bulletin 2012/25**

(73) Proprietor: **Vestel Elektronik Sanayi ve Ticaret A.S.
45030 Manisa (TR)**

(72) Inventors:
• **Cigla, Cevahir**
  **06531 Ankara (TR)**
• **Alatan, Abdullah Aydin**
  **06800 Ankara (TR)**

(74) Representative: **Cayli, Hülya
Paragon Consultancy Inc.
Koza Sokak No: 63/2
GOP
06540 Ankara (TR)**

(56) References cited:
• **VEKSLER O: "Fast variable window for stereo correspondence using integral images", PROCEEDINGS / 2003 IEEE COMPUTER SOCIETY CONFERENCE ON COMPUTER VISION AND PATTERN RECOGNITION, 18 - 20 JUNE 2003, MADISON, WISCONSIN; [PROCEEDINGS OF THE IEEE COMPUTER CONFERENCE ON COMPUTER VISION AND PATTERN RECOGNITION], LOS ALAMITOS, CALIF. [U.A, vol. 1, 18 June 2003 (2003-06-18), pages 556-561, XP010644947, DOI: 10.1109/CVPR.2003.1211403 ISBN: 978-0-7695-1900-5**
• **KE ZHANG ET AL: "Cross-Based Local Stereo Matching Using Orthogonal Integral Images", IEEE TRANSACTIONS ON CIRCUITS AND SYSTEMS FOR VIDEO TECHNOLOGY, IEEE SERVICE CENTER, PISCATAWAY, NJ, US, vol. 19, no. 7, 1 July 2009 (2009-07-01), pages 1073-1079, XP011254879, ISSN: 1051-8215**
• **DANIEL SCHARSTEIN ET AL: "A Taxonomy and Evaluation of Dense Two-Frame Stereo Correspondence Algorithms", INTERNATIONAL JOURNAL OF COMPUTER VISION, vol. 47, no. 1/3, 1 January 2002 (2002-01-01), pages 7-42, XP055074772, ISSN: 0920-5691, DOI: 10.1023/A:1014573219977**

## Description

Technical Field

The present invention provides a method for estimating the disparity of stereo content. In particular, the invention refers to the extraction of 3D information from the stereo content, enabling several applications for 3D TVs such as depth adjustment and depth based enhancement.

Prior Art

Disparity map estimation is one of the fundamental and most important tools for stereo (multi-view) image processing. As 3D TVs become available in the market, the focus on stereo processing has also gained attention. In that manner, disparity map estimation which gives information about the 3D position of the objects or pixels in the stereo (multi-view) content is inevitable. In literature, there are various methods providing disparity maps from 3D content involving stereo or multi-view video. However, computational complexity is one of the fundamental constraints that restrict the utilization of several optimization techniques enabling high quality estimates. In that manner, local methods have been popular in recent years that do not require time consuming global optimization methods. Among many alternatives, the approach of adaptive support weights gives the best precise disparity map which is estimated through weighted support from the neighbouring pixels.

However, known methods for estimating a disparity of stereo content perform various optimisation techniques which comprise a computational complexity, which are therefore not applicable for consumer electronics applications. Further, according to known methods, colour-wise similar pixels which refer to different objects may provide high support weights so that this can result in incorrect disparity maps.

In "Fast variable window for stereo correspondence using integral images" by Veksler O. a fast and accurate variable window approach for stereo correspondence is presented. The two main ideas for achieving accuracy are choosing a useful range of window sizes/shapes for evaluation and developing a new window cost which is particularly suitable for comparing windows of different sizes.

In "Cross-Based Local Stereo Matching Using Orthogonal Integral Images" by Ke Zhang, et al. an area-based local stereo matching algorithm for accurate disparity estimation across all image regions is proposed, where first for each anchor pixel an upright cross local support skeleton is adaptively constructed, with four varying arm lengths decided on colour similarity and connectivity constraints, and second given the local cross-decision results a shape-adaptive full support region is dynamically constructed on the fly, merging horizontal segments of the crosses in the vertical neighbourhood.

In "A Taxonomy and Evaluation of Dense Two-Frame Stereo Correspondence Algorithms" by D. Scharstein et al. a taxonomy of dense, two-frame stereo methods is presented.

Brief Description of the Invention

The present invention provides a method with the features of claim 1.

The fundamental approach for the solution of disparity estimation from stereo content depends on the local optimisation through cost aggregation over specific support area for each pixel. In general, the size of the support area directly affects the computational complexity of the algorithm. In order to remove the dependency of cost aggregation to the support region, a two-pass weighted integration of cost values in vertical and horizontal direction is proposed which also provides information permeability in texture-less regions and information block at edge pixels. In that manner, permeability constants for each pixel in four directions (left-right-up-down) are calculated corresponding to numbers between (0-1). These constants indicate the ration of the information that will be carried out through the pixel for the corresponding direction. The cost values for each pixel are integrated in horizontal direction by considering permeability weights in right and left scan independently. Then, the results of the two scan directions are summed up which is followed by similar operation in vertical direction. Hence, the horizontally integrated cost measures are integrated vertically as well, which provides weighted aggregation for each

pixel among the whole image in constant time, independent of support area size. Two pass weighted aggregation is performed for left and right views independently and the disparity with minimum cost among alternative candidates is assigned to the pixels. In that way, two disparity maps are obtained for left and right views. Then a cross-check is performed to detect reliable estimates and un-reliable estimates due to occlusions. The occluded regions are filled through averaging over neighbouring reliable disparity assignments, which finalizes the disparity estimation method.

Disparity estimation is an important tool to extract 3D information hidden in stereo content. Independent of the application of 3D information, estimated disparity maps should preserve depth discontinuities at object boundaries and provide reliable estimates at texture-free regions. In addition to the precision, the computational complexity of the estimation algorithm should be low in order to be suitable for consumer electronics applications. In that manner, the proposed method involves the simplest local optimization tool, the winner-take-all approach which can be used in real time application systems. In winner-take-all approaches, disparity assignments are achieved by minimizing the cost function aggregated within a support region, which can be fixed, arbitrary or adaptive sized regions. In the proposed method, weighted two pass approach provides the whole image to be the support region for each pixel, connected regions involving higher weights for colour-wise similar pixels, with constant computational effort.

According to an embodiment of the invention, the permeability constants for each pixel in four directions are calculated corresponding to a value $\mu$ between 0 and 1 by the following equation

$$\mu = \min(\exp(-\Delta R / \sigma), \exp(-\Delta G / \sigma), \exp(-\Delta B / \sigma))$$

wherein $\Delta R$, $\Delta G$ and $\Delta B$ indicate the absolute distance between the Red, Green and Blue values of the two pixels, and wherein $\sigma$ is the smoothing factor.

As an option, the method of the invention can comprise a calculation of the cost values for each pixel in the left and right view is performed by the following equation

$$Cost(x, y, d) = \sum_{i=1}^{3} \left| I_{left}(x, y, i) - I_{Right}(x + d, y, i) \right|$$

wherein Cost(x,y,d) indicates the cost values for the pixel (x,y) at disparity d, and wherein ILeft and IRight are the three channel RGB left and right images.

According to a further aspect of the invention it is advantageous that a horizontal aggregation is followed by a vertical aggregation before minimising the costs, wherein the aggregated costs (AC) are obtained for each pixel in horizontal direction according to the equations

$$AC^{Left}(x, y, d) = C(x, y, d) + \mu_{Right}(x - 1, y) * AC^{Left}(x - 1, y, d)$$

$$AC^{Right}(x, y, d) = C(x, y, d) + \mu_{Left}(x + 1, y) * AC^{Right}(x + 1, y, d)$$

$$AC^{H}(x, y, d) = AC^{Left}(x, y, d) + AC^{Right}(x, y, d)$$

and wherein the aggregated costs (AC) in vertical direction are calculated by the following equations

$$AC^{Down}(x, y, d) = AC^{H}(x, y, d) + \mu_{Down}(x, y - 1) * AC^{Down}(x, y - 1, d)$$

$$AC^{Up}(x, y, d) = AC^{H}(x, y, d) + \mu_{Up}(x, y + 1) * AC^{Up}(x, y + 1, d)$$

$$AC^{Final}(x, y, d) = AC^{Down}(x, y, d) + AC^{Up}(x, y, d)$$

As an option of the invention, the consistency check between the left and right views detects reliable and occluded regions and wherein the following occlusion handling is achieved by a two-pass weighted filtering over reliable disparity estimates for the left and right view.

## Object of the Invention

Therefore, it is the object of the present invention to provide a method for estimating a disparity of stereo content which reduces the complexity of computation while achieving a high quality stereo estimation. Further, a high precision disparity map estimation from stereo video with low computational complexity is an important functionality to extend the capability of 3D TV sets such as perceived depth adjustment and depth based enhancement. The extraction of 3D information, thus, enables further features for increasing 3D perception.

## Brief Description of the Drawings

Examples of the present invention will now be described in detail with reference to the accompanying drawings, in which:

**Figure 1** shows a flow chart for estimating the disparity of stereo content according to the invention;

**Figure 2** shows an illustration of the permeability constants in four directions for a pixel according to the invention;

**Figure 3** shows an illustration of the left scanning and weighting in a combined form to find the horizontal support according to the invention;

**Figure 4** is an illustration of the right scanning and weighting in a combined form to find the horizontal support according to the invention;

**Figure 5** is illustration of an example for horizontal effective weights of a pixel at the centre of an object according to the invention;

**Figure 6** is an illustration of the effective support weights for a pixel in vertical aggregation according to the invention;

**Figure 7** is an illustration indicating that occlusions are observed at local background around object boundaries according to the invention; and

**Figure 8** is a diagram showing the depth based reliability function assigning higher reliabilities for higher depths during occlusion handling of the invention.

The reference numbers as used in figures may possess the following meanings;

| | |
|---|---|
| Left view | (1) |
| Right view | (2) |
| Maximum depth | (3) |
| Permeability calculation | (10,20) |
| Pixel-wise cost calculation | (30) |
| Horizontal aggregation | (40, 50) |
| Vertical aggregation | (60, 70) |
| Minimization | (80) |
| Cross-check | (90) |
| Occlusion handling | (100) |

## Detailed Description of the Invention

Hereinafter, examples of the present invention will be described in detail with reference to the attached drawings. The present invention is not restricted to the following examples and many variations are possible within the scope of the present invention. The examples of the present invention are provided in order to more completely explain examples of the present invention to a person skilled in the art.

It has to be mentioned that the stereo content can be in various formats and can be supplied through various sources, which can provide digital stereo video, digital stereo images, scanned film print stereo frames through a broadcast life system in real time or through storage medium such as a hard disc, scanner, optical disc or the like.

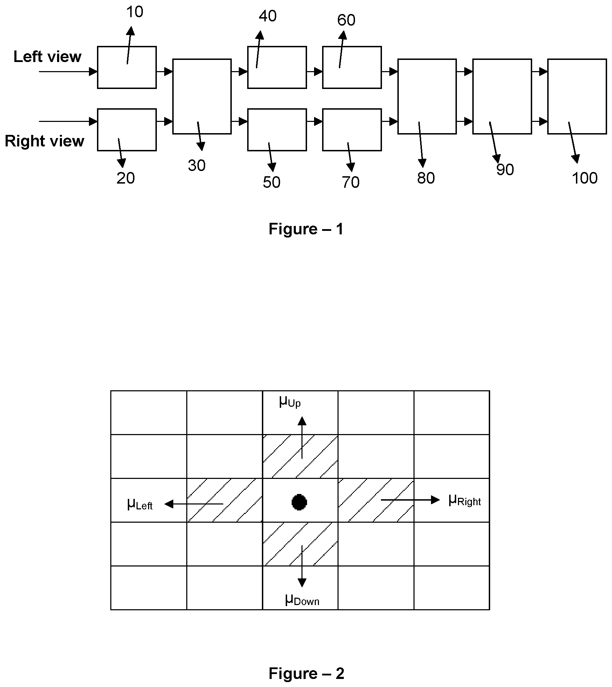

Figure 1 shows the method for estimating disparity maps according to the invention, wherein a permeability calculation is performed separately for a left view and a right view of the stereo content, wherein in particular the permeability is calculated in the left view (10) and the permeability of the right view is calculated in a separate step (20). As indicated by the two arrows, a pixel-wise cost calculation of the permeability calculations of the left view and the right view is performed (30). In the next step, a horizontal aggregation is calculated for the left view (40) and a horizontal aggregation is calculated of the right view (50). Following thereon, a vertical aggregation is performed for the left view (60) and a vertical aggregation is performed for the right view (70). A minimisation of the left view and right view is performed (80) to receive initial disparity maps based on disparity assignments for the left view and the right view that are cross-checked (90) based on a consistency check of the left view and the right view, which is used to detect occluded regions (100) by occlusion handling over reliable disparity estimates, wherein a disparity estimation algorithm provides two maps for the left and right view to receive final disparity maps. Those final disparity maps for left and right views from stereo content can be used to extract 3D information that is required for depth adjustment and depth based enhancement in 3D TVs.

According to Figures 2 to 8, the method for estimating disparity in stereo content according to the invention is described in more detail using a fast and efficient local cost aggregation method.

As shown in Figure 2, at first the information permeability of each pixel is calculated in four directions, namely in left and right as well as up and down direction. This permeability calculation determines the ratio of the information that passes through the pixel in the corresponding direction.

The permeability is measured by comparing the intensity values of the center pixel with four neighbors as illustrated in Figure 2. The color (RGB) similarity of the center pixel with the neighboring pixels determines the permeability of information through the pixel in the corresponding direction. The permeability is a weighting value within (0, 1) calculated by the following mapping function of equation (A) that takes the absolute color distances between the center and the neighbor pixels.

$$\mu = \min(\exp(-\Delta R/\sigma), \exp(-\Delta G/\sigma), \exp(-\Delta B/\sigma)) \tag{A}$$

In equation (A), $\Delta R$, $\Delta G$ and $\Delta B$ indicate the absolute distance between the R, G and B values of the two pixels, $\sigma$ is the smoothing factor. The permeability ($\mu$) is determined by taking the minimum weight among RGB color differences. These values are calculated for four directions (left-right-up-down), hence for each pixel a list of four permeability weights are calculated. As an example, the calculation of the permeability of an arbitrary pixel (x, y) into the left direction is given in the following equation (B).

$$\begin{bmatrix} \Delta R & \Delta G & \Delta B \end{bmatrix} = \left| I_{RGB}(x, y) - I_{RGB}(x-1, y) \right|$$

$$\mu_{Left}(x, y) = \min(\exp(-\Delta R/\sigma), \exp(-\Delta G/\sigma), \exp(-\Delta B/\sigma)) \tag{B}$$

Once the permeability weights are determined for each pixel, the next step is to calculate the cost values depending on the possible disparity assignments. In that manner, the sums of absolute differences of RGB values are exploited as given in the following equation (C):

$$Cost(x, y, d) = \sum_{i=1}^{3} \left| I_{left}(x, y, i) - I_{Right}(x+d, y, i) \right| \tag{C}$$

wherein Cost(x, y, d) indicates the cost values for the pixel (x, y) at disparity d; $I_{Left}$ and $I_{Right}$ are the 3 channel RGB left and right images. The cost is calculated pixel-wise which is not robust against noise, texture-less regions and even occlusions. In that manner, aggregation of the cost function over a support region increases the robustness of the algorithm. In this invention, aggregation is provided by information permeability based weighted integration in two passes. The proposed aggregation methodology involves two main steps, first horizontal integration which is followed by vertical integration.

The horizontal integration is achieved by weighted integration in left and right scan order consecutively for each row independently. In that manner pixel-wise cost values are summed towards left and right direction by the permeability weighting factors. Hence, two different aggregated costs (AC) are obtained for each pixel from opposite directions, as given in the following equation (D). The information from the left direction is carried out through permeability of pixels into the right direction, and vice-versa for the left direction.

$$AC^{Left}(x,y,d) = C(x,y,d) + \mu_{Right}(x-1,y) * AC^{Left}(x-1,y,d)$$

$$AC^{Right}(x,y,d) = C(x,y,d) + \mu_{Left}(x+1,y) * AC^{Right}(x+1,y,d)$$

$$AC^{H}(x,y,d) = AC^{Left}(x,y,d) + AC^{Right}(x,y,d) \tag{D}$$

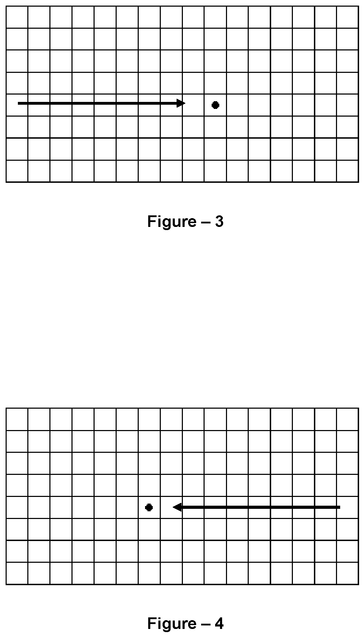

The two aggregated cost values are summed up to obtain the final horizontal aggregation value. It is important to note that during the weighted integration, permeability enables information to penetrate through smooth surfaces, while preventing information to pass from edge regions. This property provides object boundaries to be preserved during the support calculation of the cost values. As a result of the horizontal integration, depending on the texture characteristics among the corresponding row, for each pixel a weighted summation among the whole row (corresponding to horizontal window of image width) is obtained with constant computation complexity (2 multiplications and 3 additions for one pixel). The information from the further pixels penetrate by the consecutive multiplications of the permeability values; a typical weight distribution is illustrated in Figure 3 and 4, where weights of the pixel increases "0" to "1" in arrow direction. In other words dark pixels indicate weights close to "0", and bright pixels correspond to weights close to "1". The penetration approach provides connected support areas for each pixel where the effective weights decrease as the distance to the corresponding pixel increases.

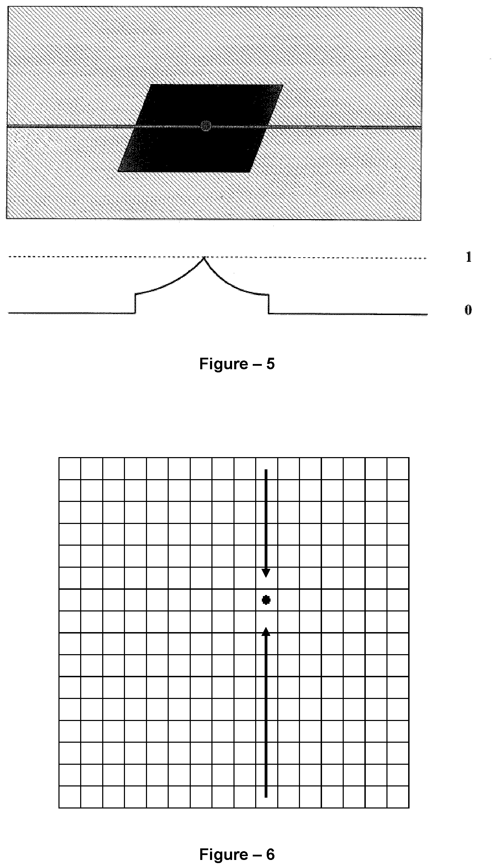

The edge preserving characteristic can also be observed in an exemplar image illustrated in Figure 5, where the weight distribution of the circled pixel is given among the horizontal direction. It is clear that the information pass through the edge locations is prevented by permeability weights.

The same idea is exploited for the weighted integration over vertical direction as well. In this case, the summation is performed on horizontally aggregated cost values in directions, up-wards and down-wards. During down-ward integration previous integrated value is weighted by the downwards permeability and summed with the current value; when this operation is followed throughout the column, each pixel involves information from the previous pixels above. For the up-ward integration, the same operation is reversed providing information transfer for each pixel from all of the pixels below. A typical effective weight distribution for a pixel is given in Figure 6, where weights of the pixel increases "0" to "1" in arrow direction and the weights decrease due to successive permeability multiplication. The update formulas of cost values in downwards and upwards are given in the following equation (E), wherein at the final stage both weighted summed cost values are added to obtain the final aggregated cost.

$$AC^{Down}(x,y,d) = AC^{H}(x,y,d) + \mu_{Down}(x,y-1) * AC^{Down}(x,y-1,d)$$

$$AC^{Up}(x,y,d) = AC^{H}(x,y,d) + \mu_{Up}(x,y+1) * AC^{Up}(x,y+1,d)$$

$$AC^{Final}(x,y,d) = AC^{Down}(x,y,d) + AC^{Up}(x,y,d) \tag{E}$$

The vertical summations of horizontally integrated values provide a rectangular support area, when the horizontal effective weights are further weighted by the vertical weights, the final support region characteristics is obtained for each pixel. Higher weights are located around the center, and a connected support region is obtained. The two pass approach can provide large support areas depending on the texture characteristics with constant operation complexity, wherein for each pixel 6 addition and 4 multiplication operations are performed independent of the window size, which is much more efficient than known methods. Therefore, adaptive support weight regions are obtained with no restriction on the support area, the region characteristics are determined by the local texture variation automatically.

The two pass summation procedure is applied for each disparity candidate and the corresponding aggregated cost values are determined. Initial disparity estimation is achieved by assigning the disparity with minimum value for each pixel independently. This operation is conducted for left and right images independently as well. The occluded and untextured regions may be problematic during the initial disparity assignment. In addition, left and right disparity estimates should be consistent in visible regions. Hence, left-right consistency check is performed to determine the reliable and unreliable assignments. In that manner, for each pixel in left (right) view, the matched pixel in the right (left) view is visited. It is expected that for a reliable pixel in the left (right) view, the visited pixel is also matched back to the corresponding pixel. The unreliable assignments do not satisfy one-to-one cross-check, hence can be detected precisely. Especially, the occluded regions which involve missing information in one of the views are determined. The cross-check step is similar in all of the disparity estimation algorithms, thus this step is the only step that is already present in known methods.

The next and the final step of this invention is the handling of occluded regions and detected unreliable disparity assignments. In general, occluded pixels are located among the depth discontinuities where object boundaries exist. The foreground objects have larger disparities; hence they occlude the background where depth is larger. As a result of this feature, it can be concluded that occluded regions belong to the local background around the depth discontinuities.

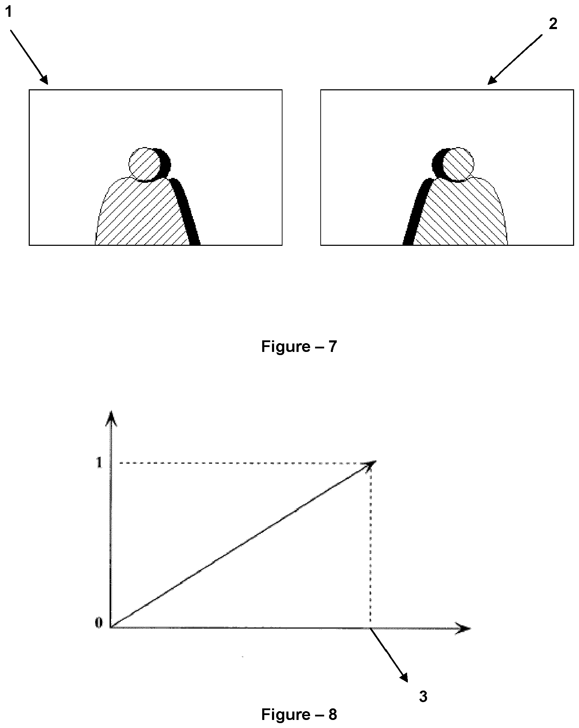

An example is illustrated in Figure 7, where the silhouette of a person indicates depth closer to the camera. In Figure 7, the "shadows" of the silhouette of the person indicate the occluded regions in left image (1) and right image (2). It is clear that occlusions are observed at background due to depth discontinuities. Thus, the missing disparity assignments of the occluded regions can be copied through the background. The occlusion handling method should consider the characteristics of the occluded regions as well. In that manner, the proposed method gives bias to the large depth assignments and performs a support strategy similar to the cost aggregation step. The disparity assignments of the occluded regions are provided by weighted averaging over reliable pixels based on depth ordering and intensity similarity.

For each pixel, depending on the reliable disparity assignment a reliability value is assigned. Reliability value for the occluded pixels is set to "0", corresponding to unreliability. A linear function with the range of (0, 1) is applied to the un-occluded pixels, which assigns "1" for the pixels having highest depth assignments, "0" for the lowest depth assignments and in between for the remaining pixels. The characteristic of the reliability mapping function is illustrated in Figure 8. This mapping function favors higher depth values, since the occluded regions belong to the local backgrounds in all cases. As in the cost aggregation step, a two pass filtering is performed on the scaled disparity assignments in vertical and horizontal direction by the permeability constants. Initially, the disparity assignments are scaled by the reliability values, in order to prevent information of occluded (unreliable) regions, decrease the effect of foreground regions for occlusion handling and give more importance to reliable background regions which are the strongest supports for occlusions. The two pass aggregation is conducted on the scaled estimated disparity maps resulting in the weighted summation of the disparity values. In order to determine the proper disparity assignment for the occluded pixel, the weighted summation should be normalized by the summation of the weights, which can be obtained by two pass aggregation over 2D reliability data. The weighted summation of 2D data composed reliability values result in the total weight that are utilized during weighted summation of the depth data for each pixel. Hence, the final disparity assignment can be achieved by the final normalization step, where the background disparity assignments are favored to fill the occlusions.

As a result, the occluded regions are filled by filtering disparity assignments of reliable regions where background pixels (whose depth is larger) are favored during filtering. This operation is performed for both left and right images independently and the final disparity maps are obtained.

In particular, the invention describes an information permeability based disparity estimation in stereo video wherein disparity maps give information about the 3D structure of the scene and enable extra functionalities such as depth adjustment and depth based image enhancement in 3D Televisions. This method according to the invention for estimating disparity maps from stereo video is a novel, fast and efficient local cost aggregation method. The support calculation strategy depends on the information permeability characteristics of pixels in four directions (left-right-up-down) based on the colour similarities with the neighbouring pixels. The permeability constants enable the information pass through smooth regions while they prevent information pass from edge pixels. In that manner, for each pixel, four permeability constants are assigned which is followed by pixel-wise cost calculation depending on RGB differences between the pixels in left and right views. Pixel wise cost values are aggregated by a two pass weighted integration strategy. In that manner, utilizing the permeability constants as the weights for the corresponding direction, horizontal weighted summation is achieved in right and left scan order. Then the same procedure is applied among vertical axes in down and up-wards directions over horizontally integrated cost values. The two pass approach provides 2D support area for each pixel depending on the texture characteristics, with a low computational complexity (6 additions and 4 multiplications for each pixel). This operation is performed for each disparity candidate, and the disparity which gives the minimum supported cost is assigned to the corresponding pixel. Initial disparity assignment is achieved for both views, which is followed by left-right consistency check detecting the reliable and occluded regions. The occlusion handling is achieved by a similar two pass weighted filtering over reliable disparity estimates. During this step, bias is given for the pixels having large depth assignments since most of the occluded regions are the background pixels around depth discontinuities. Occlusion handling finalizes the disparity estimation algorithm providing two maps for left and right views modelling the 3D structure of the scene and enabling depth adjustment and depth based image enhancement for 3D Televisions on stereo contents.

The method according to the invention can also be extended to 3D model extraction from views captured through multiple cameras as well.

**Claims**

1. Method for estimating the disparity of stereo content, in particular such as digital stereo video, digital images, scanned film print stereo frames through a broadcast life system in real time or through a storage medium such as a hard disc, scanner, optical disc or the like of the left view and the right view of at least two cameras, comprising the following successive steps:

   - for each pixel in said left view and right view, calculating the permeability constants in left, right up and down directions by comparing the intensity values of a relevant pixel and neighbouring pixel in left, right up and down directions (10, 20),
   - calculating cost values for each pixel depending on colour differences between the pixels in the left and right view (30),
   - for each pixels in said left view and right view, calculating aggregated cost values using permeability constants of pixels and calculated cost values (40, 50, 60, 70),
   - minimising the cost function for each pixel by minimising the aggregated cost values within a support region to assign an initial disparity map of the left and right view (80),

   **characterized in that**
   the permeability constants for each pixel in four directions are calculated corresponding to a value $\mu$ between 0 and 1 by the following equation

$$\mu = \min(\exp(-\Delta R / \sigma), \exp(-\Delta G / \sigma), \exp(-\Delta B / \sigma))$$

   wherein $\Delta R$, $\Delta G$ and $\Delta B$ indicate the absolute distance between the Red, Green and Blue values of the relevant pixel and one of neighbouring pixels in four directions, and wherein $\sigma$ is the smoothing factor.

2. Method according to claim 1, **characterized in that** the calculation of the cost values for each pixel in the left and right view is performed by the following equation

$$C(x, y, d) = \sum_{i=1}^{3} \left| I_{left}(x, y, i) - I_{Right}(x + d, y, i) \right|$$

   wherein C(x,y,d) indicates the cost values for the pixel (x,y) at disparity d, and wherein $I_{Left}$ and $I_{Right}$ are the three channel RGB left and right images.

3. Method according to one of the preceding claims, **characterized in that** the horizontal aggregation is followed by a vertical aggregation before minimising the costs, wherein the aggregated costs (AC) are obtained for each pixel in horizontal direction according to the equations

$$AC^{Left}(x, y, d) = C(x, y, d) + \mu_{Right}(x - 1, y) * AC^{Left}(x - 1, y, d)$$

$$AC^{Right}(x, y, d) = C(x, y, d) + \mu_{Left}(x + 1, y) * AC^{Right}(x + 1, y, d)$$

$$AC^{H}(x, y, d) = AC^{Left}(x, y, d) + AC^{Right}(x, y, d)$$

and wherein the aggregated costs (AC) in vertical direction are calculated by the following equations

$$AC^{Down}(x,y,d) = AC^{H}(x,y,d) + \mu_{Down}(x,y-1)*AC^{Down}(x,y-1,d)$$

$$AC^{Up}(x,y,d) = AC^{H}(x,y,d) + \mu_{Up}(x,y+1)*AC^{Up}(x,y+1,d)$$

$$AC^{Final}(x,y,d) = AC^{Down}(x,y,d) + AC^{Up}(x,y,d)$$

and where $\mu_{Left}$ is calculated by the following equation:

$$\left[\Delta R \ \Delta G \ \Delta B\right] = \left|I_{RGB}(x,y) - I_{RGB}(x-1,y)\right|$$

$$\mu_{Left}(x,y) = \min(\exp(-\Delta R/\sigma), \exp(-\Delta G/\sigma), \exp(-\Delta B/\sigma))$$

and where $u_{Right}$, $\mu_{Up}$, and $\mu_{Down}$ are calculated accordingly, but based on intensity values in the other directions.

**Patentansprüche**

1. **Verfahren** zum Abschätzen der Disparität von Stereo-Inhalt, speziell beispielsweise digitales Stereo-Video, digitale Bilder, gescannte Analog-Film-Stereo-Bilder über ein LiveSendungssystem in Echtzeit oder über ein Speichermedium, beispielsweise eine Festplatte, Scanner, optischer Datenträger (Disk) oder dergleichen, des linken Blicks (view) und des rechten Blicks (view) von zumindest zwei Kameras, mit den folgenden aufeinanderfolgenden Schritten:

   - für jedes Pixel in dem linken Blick und dem rechten Blick, Berechnen der Permeabilitätskonstanten in den Richtungen links, rechts, oben und unten durch Vergleichen der Intensitätswerte eines relevanten Pixels und benachbarter Pixel in den Richtungen links, rechts, oben und unten (10, 20),
   - Berechnen von Kostenwerten (cost values) für jedes Pixel in Abhängigkeit von Farbunterschieden zwischen den Pixeln des linken und rechten Blicks (30),
   - für jedes Pixel in dem linken Blick und dem rechten Blick, Berechnen von aggregierten Kostenwerten unter Verwendung von Permeabilitätskonstanten von Pixeln und berechneten Kostenwerten (40, 50, 60, 70),
   - Minimieren der Kostenfunktion für jedes Pixel durch Minimieren der aggregierten Kostenwerte innerhalb eines stützenden Bereichs (support region) zum Zuweisen einer anfänglichen Disparitäts-Karte des linken und rechten Blicks (80),

   **dadurch gekennzeichnet, dass**
   die Permeabilitätskonstanten für jedes Pixel in vier Richtungen entsprechend einem Wert n zwischen 0 und 1 durch die folgende Gleichung berechnet werden

   $$\mu = \min(\exp(-\Delta R/\sigma), \exp(-\Delta G/\sigma), \exp(-\Delta B/\sigma))$$

   worin $\Delta R$, $\Delta G$ und $\Delta B$ den absoluten Abstand zwischen den Rot-, Grün- und Blau-Werten des relevanten Pixels und einem der in vier Richtungen benachbarten Pixel angeben, und worin $\sigma$ der Glättungsfaktor ist.

2. Verfahren nach Anspruch 1, **dadurch gekennzeichnet, dass** die Berechnung der Kostenwerte für jedes Pixel in dem linken und rechten Blick durch die folgende Gleichung durchgeführt wird

$$C(x,y,d) = \sum_{i=1}^{3} \left| I_{left}(x,y,i) - I_{Right}(x+d,y,i) \right|$$

worin C(x,y,d) den Kostenwert für das Pixel (x,y) bei Disparität d angibt und worin $I_{Left}$ und $I_{Right}$ dreikanalige RGB-Bilder, links und rechts, sind.

3. Verfahren nach einem der vorstehenden Ansprüche, **dadurch gekennzeichnet, dass** die horizontale Aggregation von einer vertikalen Aggregation gefolgt ist, bevor die Kosten minimiert werden, wobei die aggregierten Kosten (AC) für jedes Pixel in horizontaler Richtung erhalten werden nach den Gleichungen

$$AC^{Left}(x,y,d) = C(x,y,d) + \mu_{Right}(x-1,y) * AC^{Left}(x-1,y,d)$$

$$AC^{Right}(x,y,d) = C(x,y,d) + \mu_{Left}(x+1,y) * AC^{Right}(x+1,y,d)$$

$$AC^{H}(x,y,d) = AC^{Left}(x,y,d) + AC^{Right}(x,y,d)$$

und wobei die aggregierten Kosten (AC) in vertikaler Richtung berechnet werden nach den Gleichungen

$$AC^{Down}(x,y,d) = AC^{H}(x,y,d) + \mu_{Down}(x,y-1) * AC^{Down}(x,y-1,d)$$

$$AC^{Up}(x,y,d) = AC^{H}(x,y,d) + \mu_{Up}(x,y+1) * AC^{Up}(x,y+1,d)$$

$$AC^{Final}(x,y,d) = AC^{Down}(x,y,d) + AC^{Up}(x,y,d)$$

und wobei $\mu_{Left}$ durch die folgende Gleichung berechnet wird:

$$[\Delta R\ \Delta G\ \Delta B] = \left| I_{RGB}(x,y) - I_{RGB}(x-1,y) \right|$$

$$\mu_{Left}(x,y) = \min(\exp(-\Delta R/\sigma), \exp(-\Delta G/\sigma), \exp(-\Delta B/\sigma))$$

und wobei $\mu_{Right}$, $\mu_{Up}$, und $\mu_{Down}$ entsprechend berechnet werden, jedoch basierend auf Intensitätswerten in den anderen Richtungen.

## Revendications

1. Procédé d'estimation de la disparité d'un contenu stéréo, en particulier tel qu'une vidéo stéréo numérique, des images numériques, des trames stéréo d'impressions photo scannées par le biais d'un système de diffusion en direct ou par le biais d'un support de stockage tel qu'un disque dur, un scanner, un disque optique ou similaire, de la vue gauche et de la vue droite d'au moins deux caméras, comprenant les étapes successives suivantes :

   - pour chaque pixel dans lesdites vue gauche et vue droite, le calcul des constantes de perméabilité dans des directions en haut et en bas à gauche, à droite, en comparant les valeurs d'intensité d'un pixel concerné et d'un pixel voisin dans les directions en haut et en bas à gauche, à droite (10, 20),
- le calcul de valeurs de coût pour chaque pixel en fonction de différences de couleurs entre les pixels dans la vue gauche et droite (30),
- pour chaque pixel dans lesdites vue gauche et vue droite, le calcul des valeurs de coût agrégées en utilisant des constantes de perméabilité et des valeurs de coût calculées (40, 50, 60, 70),
- la minimisation de la fonction de coût pour chaque pixel en minimisant les valeurs de coût agrégées à l'intérieur d'une région de support pour attribuer une carte de disparité initiale à la vue gauche et droite (80),

**caractérisé en ce que**
les constantes de perméabilité pour chaque pixel dans quatre directions sont calculées, correspondant à une valeur $\mu$ entre 0 et 1, par l'équation suivante

$$\mu = \min(\exp(-\Delta R/\sigma), (\exp(-\Delta G/\sigma), (\exp(-\Delta B/\sigma))$$

où $\Delta R$, $\Delta G$ et $\Delta B$ indiquent la distance absolue entre les valeurs rouge, verte et bleue du pixel concerné et d'un des pixels voisins dans quatre directions et dans lequel $\sigma$ est le facteur de lissage.

2. Procédé selon la revendication 1, **caractérisé en ce que** le calcul des valeurs de coût pour chaque pixel dans la vue gauche et droite est effectué par l'équation suivante

$$C(x, y, d) = \sum_{i=1}^{3} \left| I_{gauche}(x, y, i) - I_{droite}(x + d, y, i) \right|$$

où C(x,y,d) indique les valeurs de coût pour le pixel (x,y) à une disparité d, et où $I_{gauche}$ et $I_{droite}$ sont les images gauche et droite des trois canaux RGB.

3. Procédé selon une des revendications précédentes, **caractérisé en ce que** l'agrégation horizontale est suivie par une agrégation verticale avant de minimiser les coûts, dans lequel les coûts agrégés (AC) sont obtenus pour chaque pixel dans une direction horizontale suivant les équations

$$AC^{Gauche}(x,y,d) = C(x,y,d) + \mu_{Droite}(x-1,y)*AC^{Gauche}(x-1,y,d)$$

$$AC^{Droite}(x,y,d) = C(x,y,d) + \mu_{Gauche}(x+1,y)*AC^{Droite}(x+1,y,d)$$

$$AC^{H}(x,y,d) = AC^{Gauche}(x,y,d) + AC^{Droite}(x,y,d)$$

et dans lequel les coûts agrégés (AC) dans une direction verticale sont calculés par les équations suivantes

$$AC^{Bas}(x,y,d) = AC^{H}(x,y,d) + \mu_{Bas}(x,y-1)*AC^{Bas}(x,y-1,d)$$

$$AC^{Haut}(x,y,d) = AC^{H}(x,y,d) + \mu_{Haut}((x,y+1)*AC^{Haut}(x,y+1,d)$$

$$AC^{Final}(x,y,d) = AC^{Bas}(x,y,d) + AC^{Haut}(x,y,d)$$

et où $\mu_{Gauche}$ est calculé par l'équation suivante :

$$[\Delta R \; \Delta G \; \Delta B] = \left| I_{RGB}(x,y) - I_{RGB}(x-1,y) \right|$$

$$\mu_{Gauche}(x,y) = \min(\exp(-\Delta R/\sigma), \exp(-\Delta G/\sigma), \exp(-\Delta B/\sigma))$$

et où $\mu_{Droit}$e, $\mu_{Haut}$ et $\mu_{Bas}$ sont calculés en conséquence, mais sur la base de valeurs d'intensité dans les autres directions.

Figure – 1

Figure – 2

Figure – 3

Figure – 4

Figure – 5

Figure – 6

1

2

Figure – 7

1

0

3

Figure – 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. SCHARSTEIN.** *A Taxonomy and Evaluation of Dense Two-Frame Stereo Correspondence Algorithms*